# EUROPÄISCHE PATENTSCHRIFT

(11) **EP 1 241 568 B1**
(45) Veröffentlichungstag und Bekanntmachung des Hinweises auf die Patenterteilung: **19.05.2004**
(21) Anmeldenummer: 02005907.7
(22) Anmeldetag: 14.03.2002
(51) Int. Cl.: G06F 9/44, G05B 19/409

(54) **Verfahren und Vorrichtung zur Einfügung von Variablen in den Programmablauf einer Datenverarbeitungsanlage**
Method and apparatus for entering variables into the program flow of a data processing system
Procédé et dispositif pour l'insertion des variables dans le programme d'un système de traitement de données

(30) Priorität: 14.03.2001 DE 10112262
(43) Veröffentlichungstag der Anmeldung: 18.09.2002
(73) Patentinhaber: SIEMENS AKTIENGESELLSCHAFT, 80333 München (DE)
(72) Erfinder: Klose, Ralf, 90518 Altdorf (DE); Rupprecht, Georg, 90409 Nürnberg (DE)

(56) Entgegenhaltungen:
- US-A- 4 204 253
- BAUDER I, BÄR J : "Access 2000 und MS SQL Server im Teamwork" August 2000 (2000-08) , CARL HANSER VERLAG , MÜNCHEN WIEN XP002203084 * Seite 385 - Seite 387 *
- IEC : "International Standard (6)1131-3: Programmable controllers - Part 3: Programming languages" März 1993 (1993-03) , INTERNATIONAL ELECTROTECHNICAL COMMISSION (IEC) , GENF XP002203085 * Seite 151 - Seite 199 * * Seite 367 - Seite 371 *
- WEISS M A: "Data Structures and Algorithm Analysis in ADA" 1993 , THE BENJAMIN/CUMMINGS PUBLISHING COMPANY, INC. , USA XP002203086 * Seite 105 - Seite 107 *
- PANTHAM S: "Pure JFC Swing" Februar 1999 (1999-02) , SAMS , INDIANAPOLIS XP002203087 * Seite 176 - Seite 177 *

## Beschreibung

Die Erfindung betrifft ein Verfahren zum Einfügen von Operanden oder Variablen in den Programmablauf einer Datenverarbeitungsanlage, wobei die Operanden oder die Variablen betreffenden Objekte im Programm zunächst in einer aus verschiedenen Ordnern gebildeten Baumstruktur abgelegt sind.

In der industriellen Prozessleittechnik wird beispielsweise die Organisation einer Ablaufsteuerung in der Regel über entsprechende Programmierungen in der Datenverarbeitungsanlage vorgegeben, wobei die hier vereinfachend Schaltvorgänge genannten Aktionen mittels verschiedener Aktoren, beispielsweise auch unter Auswertung von Sensordaten oder sonstiger vorgegebener Variablen, durchgeführt werden. Der zu steuernde Prozess wird dabei durch entsprechende Funktions- und Datenmodelle grafisch und darüber hinaus auch programmiertechnisch in der Datenverarbeitungsanlage bzw. im Computer abgebildet.

In der Ablaufsteuerung wird dabei häufig die Hinzuziehung bestimmter Variablen oder Operanden für die Auslösebedingungen der Schaltvorgänge gefordert, deren genaue Bezeichnung nicht bekannt ist bzw. nur eine Auswahl möglicher Bezeichnungen vorhanden ist.

US-A-4 204 253 offenbart ein Verfahren zum Erzeugen und Korrigieren von Benutzerprogrammen. Eine Auswahl einer Variablen wird durch eine Auswertung einer Eingabesyntax ermöglicht.

Druckschrift "Access 2000 und MS SQL Server im Teamwork", August 2000, Carl Hanser Verlag, München Wien, XP002203084 beschreibt ein so genanntes "Auto-Editing", wobei zum Einfügen von Objekten aufklappbare Menüs vorgesehen sind.

Aus der Druckschrift "International Standard (6)1131-3: Programmable controllers - Part 3: Programming languages", März 1993, International Electrotechnical Commission (IEC), Genf XP002203085 sind so genannte Sequential Function Charts (SFC) als grafisches Verfahren zur Programmausführungskontrolle von Automatisierungsgeräten bekannt.

Der Erfindung liegt daher die Aufgabe zugrunde, ein Verfahren der eingangs genannten Art zum Einfügen von Operanden oder Variablen in den Programmablauf einer Datenverarbeitungsanlage, insbesondere zur Gestaltung des Ablaufs elektronisch gesteuerter Schaltvorgänge, zu schaffen, bei dem auch unter Zuhilfenahme grafischer Programmierwerkzeuge eine einfache Zuordnung von Variablen oder Operanden zu den Schaltvorgängen möglich ist.

Diese Aufgabe wird durch die im kennzeichnenden Teil des Anspruchs 1 angegebenen Maßnahmen gelöst.

Bevorzugt erfolgt dabei diese Auswertung innerhalb des Auswahlvorgangs schrittweise durch Auswertung von aufeinander folgenden Buchstaben, Silben oder Wörtern bei der Eingabe des jeweiligen Objektnamens. Insbesondere ist vorteilhaft, dass eine Vereinheitlichung der Vorgehensweise für die Berücksichtigung von einfachen und strukturierten Variablen mit dem Nebeneffekt erreicht wird, auch den komplexeren Anwendungsfall mit den gewohnten gleichen einfachen Mitteln abdecken zu können.

Beispielsweise wird während der Programmerstellung zur Steuerung eines industriellen Prozesses häufig auf vorhandene Variablen zugegriffen, die z. B. aus dem lokalen Kontext der gerade programmierten Einheit als eigene lokale Variable des ausgeführten Programmschritts oder aus dem globalen Umfeld des zu steuernden Prozesses als übergreifendes globales Datum stammen. Auch kann es sich hier um einfache Sensordaten oder auch um beliebig strukturierte Daten handeln, die für die Ausführung der Programmschritte von Bedeutung sind. Hierbei ist zu beachten, je komplexer die jeweilige Applikation und je verschachtelter die zu berücksichtigende Variable ist, desto aufwendiger ist es, die Kenntnis der exakten Schreibweise des Variablennamens vorauszusetzen und die richtige Eingabe sicherzustellen.

Es sind für sich gesehen aus der allgemeinen Datenverarbeitung zwar so genannte Editierhilfen bekannt, die entweder eine Wortvervollständigung bei der Eingabe vorschlagen, eine Auswahl der zuletzt verwendeten Namen anbieten oder sich innerhalb einer Liste mit allen in Frage kommenden Möglichkeiten an die geeignetste Stelle positionieren. Hierbei wird jedoch entweder nur eine Untermenge aller in Frage kommenden Objekte angeboten oder die Anwahl von strukturierten Variablen erfordert eine mehrstufige Anwahl.

Bei einem bevorzugten Anwendungsfall ist das erstellte Programm insbesondere zur Steuerung oder Regelung eines technischen Prozesses geeignet, so dass die Programmstellen hier Schaltvorgänge sind, die durch Steuerdaten oder von vorgegebenen Fortschaltbedingungen gesteuert sind, wobei als Operanden oder Variablen zur Beeinflussung dieser Schaltvorgänge eine Vielzahl boolscher Operanden oder Sensordaten aus dem zu steuernden oder regelnden technischen Prozess zur Verfügung stehen.

Bei der Auswahl der jeweils relevanten Operanden oder Variablen können auch in vorteilhafter Weise durch Filterung jeweils Blöcke von Operanden und/oder Variablen gleicher Struktur, wie z. B. Bool oder Integer, gebildet werden.

Die Erfindung wird anhand des in der Zeichnung dargestellten Ausführungsbeispiels erläutert. Es zeigen:
- Figur 1: eine Darstellung eines Ablaufplans für eine Steuerungsaufgabe mit symbolisch dargestellten Schaltvorgängen und den zugehörigen Fortschaltbedingungen,
- Figur 2: einen Ablaufplan wie in der Figur 1 mit der Möglichkeit der Eingabe eines Namens für einen Operanden oder eine Variable und einer Auswahl aus vorhandenen Namen nach Auswertung ihrer jeweiligen Syntax und
- Figur 3: einen Ablaufplan wie in der Figur 1 mit einer weiteren Stufe der Auswahl nach der Figur 2.

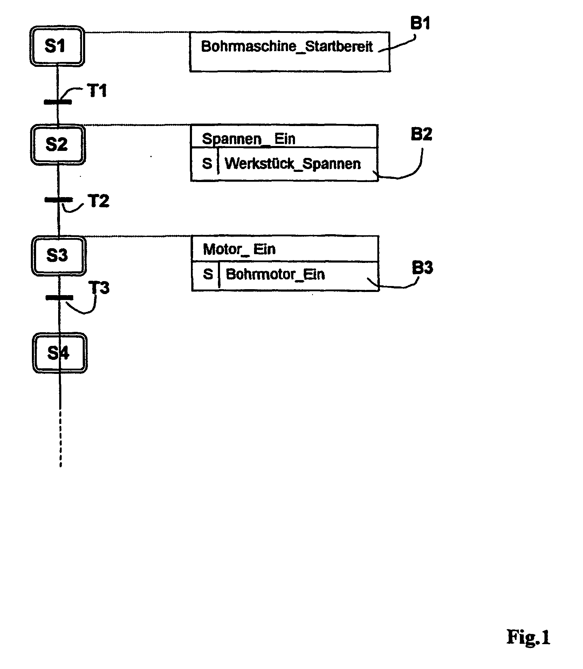

In Figur 1 ist die grafische Darstellung eines Ablaufplans zur Beschreibung einer Ablaufsteuerung für einen industriellen Prozess gezeigt, hier beispielsweise für eine Bohrmaschinensteuerung, die in einem Fertigungsprozess einsetzbar ist. Die eigentliche Steueraufgabe wird mit einer entsprechenden nicht dargestellten Datenverarbeitungsanlage, hier ein programmgesteuertes Automatisierungsgerät, abgearbeitet, wobei auf die Funktion dieser Datenverarbeitungsanlage zum Verständnis der Erfindung nicht näher eingegangen werden braucht.

Der in der Figur 1 gezeigte Ablaufplan kann Bestandteil einer Bildschirmdarstellung auf einer an sich bekannten Anzeigevorrichtung sein, wobei in dieser Bildschirmdarstellung noch weitere grafische Abbilder der Programmorganisation und ggf. Auflistungen von Operanden, Variablen oder sonstigen Zustandsgrößen enthalten sein können. An den Programmstellen mit den Schaltvorgängen S1 bis S4 sind programmierbare Schritte beschrieben, die mit gerichteten Verbindungen über Transitions- oder Fortschaltbedingungen T1 bis T3 miteinander verknüpft sind.

Neben den Schaltvorgängen S1 bis S3 sind in separaten Blöcken B1, B2, B3 der grafischen Darstellung auf einem Bildschirm weitere die Schaltvorgänge betreffende Aktionen angegeben. Zu S1 wird hier die Bohrmaschine startbereit (Block B1); zu S2 wird das Spannen für das Bohrfutter eingeleitet (Block B2) und der Befehl "Werkstück_Spannen" verarbeitet; zu S3 wird das Einschalten des Motors der Bohrmaschine eingeleitet und der Befehl "Bohrmotor_Ein" verarbeitet (Block B3).

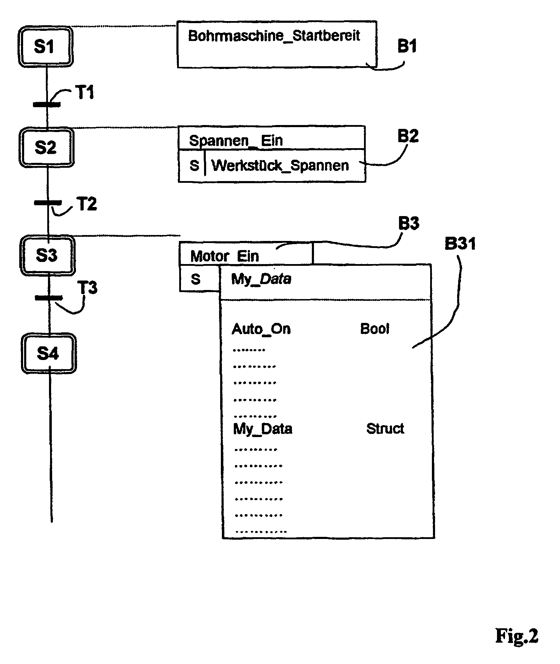

In Figur 2 ist in Abwandlung zu dem Schaltvorgang S3 nach der Figur 1 die Möglichkeit eröffnet, als Befehl z. B. einen strukturierten Operanden zu verwenden, dessen Namen bzw. Zugriffstext nicht bekannt ist. In S3 soll nunmehr der Zugriff auf den Befehl "Bohrmotor_Ein" nach der Figur 1 ersetzt werden durch den Operanden "My_Data.My_Bool", der sich aus den Daten der eigenen Schnittstelle ergeben kann. Während des Editiervorgangs in dem Eingabefeld des Blocks B3 wird automatisch eine so genannte Drop-Down-Box B31 geöffnet, die alle verfügbaren Objekte der obersten Hierarchiestufe beinhaltet, also alle im Kontext dieser Editierstelle sichtbaren globalen und lokalen Variablen.

Die Positionierung innerhalb dieser Drop-Down-Box B31 erfolgt automatisch an der dem Inhalt des Editierfeldes im Eingabefeld des Blocks B3 entsprechenden Stelle. Durch die Eingabe des Anfangs des Operanden "My..." wird beispielsweise durch eine farbliche Hinterlegung der Operand mit dem gleichen Anfangstext gekennzeichnet und in das Eingabefeld übernommen. Im Eingabefeld wird dann die Eingabe entsprechend dem in der Liste beispielsweise farblich gekennzeichneten Operanden vervollständigt, wobei die vom System hinzugefügten Buchstaben markiert werden. Der Anwender kann dabei entweder durch weitere Eingaben mit automatischem Abgleich, wodurch die markierten Buchstaben überschrieben werden, oder beispielsweise durch Abwärtsbewegung eines Cursors in der Drop-Down-Box B31 den Text im Eingabefeld des Blocks B3 vervollständigen, insbesondere wenn mehrere Operanden mit dem gleichen Textteil beginnen.

In der Drop-Down-Box B31 können alle möglichen Operanden angezeigt werden, und zwar lokale Variablen, die der Schnittstelle des eigenen Bausteins zugeordnet sind, globale Operanden oder so genannte symbolisch adressierbare Hardwareadressen. Wenn zur Festlegung des Operanden einmal in die Drop-Down-Box B31 gewechselt ist, erfolgt die weitere Selektion für dieses Editierfeld in dem Block B31. Im einfachen Fall braucht nur die entsprechende Variable selektiert und übernommen werden. Die Übernahme kann dabei durch einen so genannten Mausklick oder aber durch Betätigung der Übernahmetaste, z. B. Enter- oder Returntaste, erfolgen.

Im Fall von strukturierten Variablen können zur weiteren Selektion zwei Verfahren zur weiteren Auswahl genutzt werden. Z. B. können hier nicht dargestellte kaskadierte Menüs in der jeweiligen Drop-Down-Box B31 erzeugt werden, mit deren Hilfe in die nächste Strukturebene gewechselt wird. Es ist aber auch möglich, dass nach einer vorgebbaren, relativ kurz einstellbaren Verweilzeit bei dem ausgewählten strukturierten Operanden eine weitere Auswahlebene automatisch in die Drop-Down-Box B31 eingefügt bzw. eingespreizt wird.

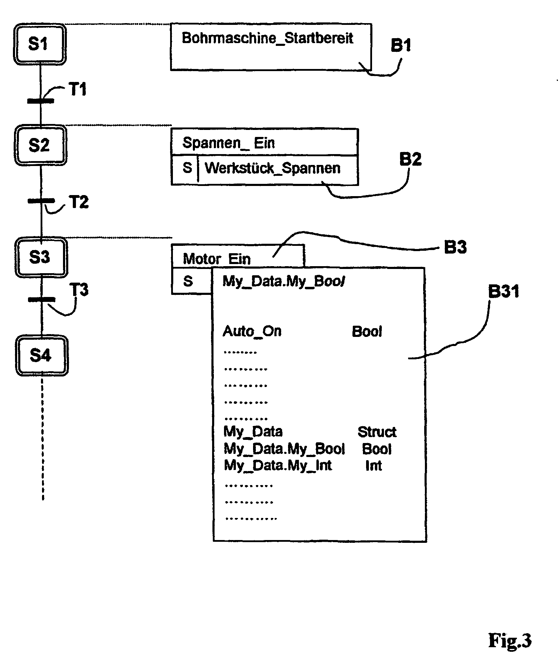

Aus Figur 3 ist die zweite Möglichkeit entnehmbar, so dass zusätzlich zur Darstellung nach der Figur 2 zum Operanden "My_Data" die zugehörigen Operanden der nächsten Auswahlebene "My_Data.My_Bool" und "My_Data.My_Int" eingefügt sind. Hierbei ist die Eingabe anhand der nächsten Auswahlebene durch einen Punkt im Eingabefeld des Blocks B3 gekennzeichnet.
Nun kann in der gleichen Vorgehensweise, wie zuvor beschrieben, durch Eingabe von "....My_B...." die Auswahl von "My_Data.My_Bool" generiert werden.

## Patentansprüche

1. Verfahren zum Einfügen von Operanden oder Variablen in den Programmablauf einer Datenverarbeitungsanlage, wobei die Operanden oder die Variablen betreffenden Objekte im Programm zunächst in einer aus verschiedenen Ordnern gebildeten Baumstruktur abgelegt sind, **dadurch gekennzeichnet, dass** in einem ersten Schritt eine linearisierte Anordnung aller Objekte gebildet wird, in einem zweiten Schritt die Bildung einer linearisierten Untermenge von Objekten erfolgt, die eine bestimmte Programmstelle (S1, S2, S3, T1, T2, T3, T4) betreffen,
wobei den Programmstellen (S1, S3, S3, T1, T2, T3, T4) zur Auswahl eines Objektes Eingabefelder in Blöcken (B1, B2, B3) zugeordnet sind und nach einem Aufruf durch einen geeigneten Programmbefehl ein Auswahlfeld (B31) erzeugt wird, das die die Programmstelle betreffende linearisierte Untermenge von Objektnamen enthält und im Verlauf der Eingabe eines Objektnamens im Eingabefeld in Blöcken (B1, B2, B3) die Syntax dieses Namens mit den Namen im Auswahlfeld (B31) verglichen wird, wobei der Name im Auswahlfeld (B31) mit der jeweils zum Eingabefeld der Blöcke (B1, B2, B3) übereinstimmenden Syntax ausgewählt wird.

2. Verfahren nach Anspruch 1, **dadurch gekennzeichnet, dass** die Auswahl schrittweise durch Auswertung von aufeinander folgenden Buchstaben, Silben oder Wörtern bei der Eingabe des Objektnamens erfolgt.

3. Verfahren nach Anspruch 1 oder 2, **dadurch gekennzeichnet, dass** das Auswahlfeld (B31) zur Auswahl der zur Verfügung stehenden Objekte eine Drop-Down-Box (B31) ist.

4. Verfahren nach einem der vorhergehenden Ansprüche, **dadurch gekennzeichnet, dass** die Auswahl der Objekte in aufeinander folgenden Auswahlebenen erfolgt, wobei die Zuschaltung der nächstfolgenden Auswahlebene durch Kaskadierung des Auswahlfeldes (B31) oder durch Einfügen der Objekte der jeweils nächsten Auswahlebene in das Auswahlfeld (B31) der vorherigen Objekte erfolgt.

5. Verfahren nach Anspruch 4, **dadurch gekennzeichnet, dass** das Einfügen der Objekte der jeweils nächsten Auswahlebene in das Auswahlfeld (B31) der vorherigen Objekte nach einer vorgebbaren Verweilzeit erfolgt.

6. Verfahren nach einem der vorhergehenden Ansprüche, das insbesondere zur Steuerung oder Regelung eines technischen Prozesses ausgeführt wird, **dadurch gekennzeichnet, dass** die Programmstellen Schaltvorgänge (S1, S2, S3) sind, die durch Steuerdaten oder von vorgegebenen Fortschaltbedingungen (T1, T2, T3, T4) gesteuert sind, und dass als Objekte zur Beeinflussung dieser Schaltvorgänge (S1, S2, S3) eine Vielzahl boolscher Operanden oder Sensordaten aus dem zu steuernden oder regelnden technischen Prozess zur Verfügung stehen.

7. Verfahren nach Anspruch 6, **dadurch gekennzeichnet, dass** bei der Auswahl der jeweils relevanten Objekte durch Filterung jeweils Blöcke von Objekten gleicher Struktur (Bool, Integer) gebildet werden.

## Claims

1. A method for inserting operands or variables into the program flow of a data processing system, the objects relating to the operands or variables initially being stored in a tree structure formed from different folders, **characterised in that** in a first step a linearised arrangement of all objects is formed, a second step being the formation of a linearised subset of objects that relate to a certain programmed point (S1, S2, S3, T1, T2, T3, T4), wherein input fields are assigned in blocks (B1, B2, B3) to the programmed points (S1, S3, S3, T1, T2, T3, T4) for the selection of an object and after a call by a suitable program command a selection field (B31) is generated which contains the linearised subset of object names relating to the programmed point and in the course of the input of an object name in the input field in blocks (B1, B2, B3) the syntax of this name is compared with the name in the selection field (B31), and the name in the selection field (B31) with the syntax matching the respective input field of the blocks (B1, B2, B3) is selected.

2. Method according to Claim 1, **characterised in that** the selection occurs step by step by evaluation of successive letters, syllables or words in the input of the object name.

3. Method according to Claim 1 or 2, **characterised in that** the selection field (B31) for the selection from the available objects is a drop-down box (B31).

4. Method according to one of the preceding claims, **characterised in that** the selection of the objects is made in successive selection levels, the switch to the next selection level occurring by cascading of the selection field (B31) or by insertion of the objects of the respective next selection level into the selection field (B31) of the previous objects.

5. Method according to Claim 4, **characterised in that** the insertion of objects of the respective next selection level into the selection field (B31) of the previous objects occurs after a dwell time which can be preset.

6. Method according to one of the preceding claims, which is executed in particular for controlling or regulating a technical process, **characterised in that** the programmed points are switching operations (S1, S2, S3), which are controlled by control data or by preset progression conditions (T1, T2, T3, T4), and that a number of Boolean operands or sensor data from the technical process to be controlled or regulated are available as objects to influence these switching operations (S1, S2, S3).

7. Method according to Claim 6, **characterised in that** for the selection of the relevant objects, blocks of objects of similar structure (bool, integer) are formed by filtering in each case.

## Revendications

1. Procédé pour l'insertion d'opérandes ou de variables dans le programme d'un système de traitement de données, des objets concernant les opérandes ou les variables dans le programme étant d'abord enregistrés dans une structure arborescente formée de différents classeurs, **caractérisé par le fait qu'**on forme dans une première étape une disposition linéarisée de tous les objets et qu'on effectue dans une deuxième étape la formation d'un sous-ensemble linéarisé d'objets qui concernent un certain point de programme (S1, S2, S3, T1, T2, T3, T4), des champs d'entrée dans des blocs (B1, B2, B3) étant associés aux points de programme (S1, S2, S3, T1, T2, T3, T4) pour la sélection d'un objet et un champ de sélection (B31) étant produit après un appel par une instruction de programme appropriée, lequel champ de sélection contient le sous-ensemble linéarisé de noms d'objets concernant le point de programme, et au cours de l'entrée d'un nom d'objet dans le champ d'entrée dans des blocs (B1, B2, B3) la syntaxe de ce nom étant comparée aux noms dans le champ de sélection (B31), le nom dans le champ de sélection (B31) dont la syntaxe coïncide avec le champ d'entrée des blocs (B1, B2, B3) étant sélectionné.

2. Procédé selon la revendication 1, **caractérisé par le fait que** la sélection s'effectue pas à pas en évaluant des lettres, syllabes ou mots successifs lors de l'entrée du nom d'objet.

3. Procédé selon la revendication 1 ou 2, **caractérisé par le fait que** le champ de sélection (B31) destiné à la sélection des objets disponibles est une Drop-Down-Box (B31).

4. Procédé selon l'une des revendications précédentes, **caractérisé par le fait que** la sélection des objets s'effectue dans des niveaux de sélection successifs, l'ajout du prochain niveau de sélection s'effectuant en mettant en cascade le champ de sélection (B31) ou en insérant les objets du prochain niveau de sélection respectif dans le champ de sélection (B31) des objets précédents.

5. Procédé selon la revendication 4, **caractérisé par le fait que** l'insertion des objets du prochain niveau de sélection respectif dans le champ de sélection (B31) des objets précédents s'effectue après une temporisation pouvant être prédéterminée.

6. Procédé selon l'une des revendications précédentes, qui est réalisé notamment pour la commande ou la régulation d'un processus technique, **caractérisé par le fait que** les points de programme sont des opérations de commutation (S1, S2, S3) qui sont commandées par des données de commande ou par des conditions de progression prédéterminées (T1, T2, T3, T4) et que l'on dispose comme objets pour influencer ces opérations de commutation (S1, S2, S3) de nombreux opérandes booléens ou données de capteurs issues du processus technique à commander ou réguler.

7. Procédé selon la revendication 6, **caractérisé par le fait que**, lors de la sélection des objets respectivement déterminants, on forme par filtrage à chaque fois des blocs d'objets ayant la même structure (Bool, Integer).
